# EUROPÄISCHE PATENTANMELDUNG

(11) **EP 3 346 604 A1**
(43) Veröffentlichungstag der Anmeldung: **11.07.2018**
(21) Anmeldenummer: 17150554.8
(22) Anmeldetag: 06.01.2017
(51) Int. Cl.: H02P 25/02, B60L 3/10

(54) **VERFAHREN ZUM BETRIEB EINER ELEKTRISCHEN ASYNCHRONMASCHINE**

(71) Anmelder: Skarpetowski, Grzegorz, 5417 Untersiggenthal (CH)
(72) Erfinder: Skarpetowski, Grzegorz, 5417 Untersiggenthal (CH)
(74) Vertreter: Dittmann, Rolf

(57) **Zusammenfassung**

Beschrieben ist ein Verfahren zum Betrieb einer elektrischen Asynchronmaschine. Das Verfahren umfasst, die elektrische Asynchronmaschine in einem Arbeitspunkt zu betreiben, bei dem an die Statorwicklung eine Wechselspannung mit einer ersten Stator-Spannungsamplitude und einer ersten Statorfrequenz angelegt wird, wobei ein Stator-Wechselstrom mit einer Stator-Stromamplitude fliesst. Der Rotor dreht sich mit einer Rotordrehzahl und an einer Abtriebswelle der Asynchronmaschine wird ein Drehmoment erzeugt. Im Arbeitspunkt wirkt dem an der Abtriebswelle erzeugten Drehmoment ein Lastmoment entgegen, welches dem erzeugtenDrehmoment entspricht. Das Verfahren umfasst weiterhin, zu bestimmen, ob ein Lastverlust-Zustand vorliegt, in dem der Betrag des Lastmoments kleiner ist als der Betrag des erzeugten Drehmoments an der Abtriebswelle. In einem Lastverlust-Zustand wird die Statorfrequenz gleichsinnig mit der Rotordrehzahl unabhängig von der Amplitude der Statorspannung verändert.

## Beschreibung

### TECHNISCHES GEBIET

Die vorliegende Beschreibung betrifft ein Verfahren zum Betrieb einer elektrischen Asynchronmaschine der im Anspruch 1 beschriebenen Art.

### TECHNOLOGISCHER HINTERGRUND

Für zahlreiche Antriebszwecke werden elektrische Asynchronmaschinen verwendet. Das grundlegende Funktionsprinzip der Asynchronmaschinen ist dem Fachmann an sich geläufig, und soll daher nur kurz phänomenologisch beschrieben werden. An Statorwicklungen der Asynchronmaschine wird ein elektromagnetisches Stator-Drehfeld erzeugt, das mit einer bestimmten Frequenz, der Statorfrequenz, um eine Drehachse der Asynchronmaschine umläuft. In einem Rotor der Asynchronmaschine werden durch dieses Drehfeld Ströme induziert, die ihrerseits ein Rotor-Magnetfeld hervorrufen. Das Stator-Drehfeld zieht sozusagen das Rotor-Drehfeld hinter sich her und erzeugt somit ein Drehmoment am Rotor.

Wie leicht nachvollziehbar ist, ist bei sonst konstanten Randbedingungen das von der elektrischen Asynchronmaschine erzeugte Drehmoment von der Differenz zwischen der Statorfrequenz und der Drehzahl, mit der der Rotor umläuft, abhängig. Bei einer synchronen Drehzahl, wenn also die Drehzahl des Rotors der Frequenz des Stator-Drehfeldes entspricht, wird kein Strom im Rotor induziert und die Asynchronmaschine erzeugt kein Drehmoment. Mit steigender Differenz zwischen der Frequenz des Statordrehfelds und der Drehzahl des Rotors steigt der induzierte Rotorstrom, und somit das im Rotor induzierte Magnetfeld, und letztlich auch das Drehmoment am Rotor. Die Differenz zwischen der Frequenz des Statordrehfelds und der Drehzahl des Rotors wird auch als Rotorfrequenz bezeichnet; es ist dies die Frequenz des Rotordrehfelds im Bezugssystem des Rotors.

Derartige Asynchronmaschinen können auf vollkommen analoge Weise zum Bremsen, das heisst zum Abstützen eines an der Abtriebswelle anliegenden Drehmoments, betrieben werden, indem die Statorfrequenz kleiner ist als die Rotordrehzahl.

Im Rahmen der vorliegenden Beschreibung beziehen sich die Angaben von Frequenzen auf elektrische und/oder magnetische Grössen, während zur Beschreibung mechanischer Grössen der Begriff Drehzahl gewählt wurde. Die Rotordrehzahl beschreibt also die mechanische Drehzahl des Rotors, während die Rotorfrequenz die Frequenz eines Stromes im Rotor und eines von diesem induzierten und umlaufenden Magnetfeldes im Bezugssystem des Rotors beschreibt.

Mit steigender Rotorfrequenz steigt das am Rotor erzeugte Drehmoment, ob Antriebsmoment oder Bremsmoment, steil an, bis zu einem Kipppunkt, ab dem das Drehmoment wieder abfällt. Erwünschte stabile Betriebspunkte einer Asynchronmaschine liegen, sowohl im Bremsbetrieb als auch beim motorischen Betrieb als Antrieb, zwischen der Drehzahl des jeweiligen Kipppunkts und der synchronen Drehzahl.

Die nachfolgenden Ausführungen geben zum besseren Verständnis verbreitete Ausführungsformen beispielhaft wieder und sind nicht einschränkend zu verstehen.

Das Stator-Drehfeld wird dadurch erzeugt, dass an Statorwicklungen eine Dreiphasen-Wechselspannung angelegt wird. Dabei ist der Spannungsverlauf der einzelnen Phasen periodisch, beispielsweise sinusförmig. Die Spannungsverläufe der einzelnen Phasen über der Zeit sind derart zueinander versetzt, dass, bezogen auf eine Vollwelle der Spannungsverläufe, also einer vollen Periode über 360°, die einzelnen Phasen zueinander 120° phasenversetzt sind. Asynchronmaschinen, die in der genannten Art betrieben werden, umfassen ein ganzzahliges Vielfaches von drei an Statorwicklungen, die üblicherweise gleichmässig am Umfang des Stators verteilt sind. Mit anderen Worten, am Stator sind p Statorwicklungen angeordnet, wobei p ein ganzzahliges Vielfaches von drei ist. Am Umfang des Rotors sind ebenfalls Leiter angeordnet; dies können einfache Leiterstäbe- oder Schienen sein, oder Wicklungen. Üblicherweise sind alle am Umfang des Rotors verteilten Leiter an jeder Stirnseite des Rotors miteinander zu einem Käfig verbunden, derart, dass aufgrund einer in einem Rotor-Leiter induzierten Spannung ein Strom fliessen kann und ebenfalls ein Magnetfeld des Rotors erzeugt wird. Bei einem sogenannten Käfigläufer haben die Leiter des Rotors keine Verbindung zu einer externen Spannungsversorgung, weshalb auf Elemente zur Stromübertragung auf den Rotor verzichtet werden kann.

Elektrische Asynchronmaschinen finden auch in Fahrzeugantrieben Verwendung, und insbesondere in Bahnantrieben. Die Speisung der Statorwicklungen erfolgt dabei üblicherweise über Wechselrichter, die eine Wechselspannung mit einer variablen Frequenz und Amplitude bereitzustellen in der Lage sind. Die Amplitude der Statorspannung wird gemäss einer verbreiteten Betriebsart als Funktion der Frequenz der Statorspannung, die im Folgenden auch kurz als Statorfrequenz bezeichnet wird, vorgegeben. Dabei ist es bei Traktionsantrieben bekannt, bis zu einer ersten Statorfrequenz die Statorflussverkettung konstant zu halten, und oberhalb dieser Frequenz die Spannungsamplitude konstant zu halten.

Wie oben dargelegt wird beim Betrieb einer Asynchronmaschine ein Antriebsmoment erzeugt, wenn die Rotordrehzahl kleiner ist als die Statorfrequenz, und es wird ein Bremsmoment erzeugt, wenn die Rotordrehzahl grösser ist als die Statorfrequenz, und bei einer zunehmenden Abweichung der Rotordrehzahl von der Statorfrequenz steigt der Absolutwert des Drehmoments bis zu einem Kipppunkt bei einer Kipp-Rotorfrequenz steil an. Im Nennbetrieb wird die Asynchronmaschine typischerweise mit einer Rotordrehzahl betrieben, die zwischen den beiden Kipppunkten der Momentenkennlinie liegt, also im Bereich eines sehr hohen Gradienten des Drehmoments über der Rotordrehzahl bzw. der Rotorfrequenz. Die Asynchronmaschine weist demnach eine Nebenschlusskennlinie auf, bei der eine geringe Annäherung der Rotordrehzahl an die Statorfrequenz bei ansonsten konstanter Statorfrequenz und - spannungsamplitude einen starken Drehmomentabfall verursacht. Dies hat den Vorteil, dass die Drehzahl des Antriebs auch bei Schwankungen des Lastmomentes nahezu konstant bleibt. Beispielsweise wird beim Antrieb eines Fahrzeugs mit einer bestimmten Geschwindigkeit die Geschwindigkeit bei Bergauf- wie Bergabfahrt ohne äussere Regeleingriffe nahezu konstant gehalten. Nachteilig ist allerdings, dass bei einem Lastverlust, beispielsweise in einem Fahrzeugantrieb bei Traktionsverlust, das Antriebsmoment nahezu ohne Verzögerung zu Null wird.

Unten sind im Zusammenhang mit der Zeichnung beispielhafte Drehmomentverläufe von Asynchronmaschinen dargestellt.

Beim Beschleunigen eines Bahnbetriebsfahrzeuges wird beispielsweise ein bestimmtes Drehmoment vorgegeben. Die Amplitude der Statorspannung wird in Abhängigkeit von der Statorfrequenz gemäss den oben beschriebenen Kriterien eingestellt. Die Statorfrequenz wird mit dem Drehmoment bzw. der Amplitude des Statorstroms als Leitgrösse geregelt, um das vorgegebene Drehmoment einzuhalten.

Nach dem Stand der Technik werden die Asynchronmaschinen in einem Modus betrieben, bei dem jeder Statorfrequenz genau eine konstante Amplitude der Statorspannung zugeordnet ist.

Falls also bei einem Adhäsionsantrieb beim Betrieb der Maschine mit konstanter Statorfrequenz ein Rad die Haftreibung verliert, so wird dieses kurzfristig stark beschleunigen, dann allerdings schnell an Antriebsmoment verlieren. Sobald wieder ein höherer Reibwert zwischen Rad und Untergrund vorliegt, wird das Rad entsprechend wieder sehr stark abgebremst. Sobald der Reibwert wieder hinreichend gross ist, wird das Rad so weit abgebremst, dass die Umfangsgeschwindigkeit am Rad wieder der Fahrgeschwindigkeit entspricht und wieder Haftreibung zwischen dem Rad und dem Untergrund hergestellt ist. Der Abbremsvorgang ist wiederum mit einem schnellen und starken Anstieg des Drehmoments verbunden. Die stark und sehr schnell schwankenden Antriebsmomente resultieren in einer starken dynamischen Belastung aller Komponenten im Antriebsstrang. Ausserdem kann ein Bahnantrieb die zur Verfügung stehende Leistung nicht adäquat in Antriebsleistung umsetzen. Beim Beschleunigen des Fahrzeugs hingegen würde eine Achse, die Traktion verloren hat, bei der herkömmlichen Regelung auf ein bestimmtes Antriebsmoment unkontrolliert durchdrehen.

### DARSTELLUNG DES GEGENSTANDES DER VORLIEGENDEN BESCHREIBUNG

Vorliegend wird ein Verfahren der eingangs beschriebenen Art angegeben. Gemäss einem Aspekt ist das Verfahren derart ausgestaltet, dass eine Änderung der Rotordrehzahl in einer geringeren Änderung des Antriebsmoments oder Bremsmoments resultiert als dies nach dem Stand der Technik der Fall ist. Gemäss einem weiteren Aspekt ist das Verfahren derart ausgestaltet, dass beim Lastverlust das Antriebsmoment oder Bremsmoment in geeigneter Weise nachgeregelt wird, so, dass das Vorzeichen des von der Asynchronmaschine erzeugten Drehmoments nicht wechseln kann. Unter einem Lastverlust ist eine schnelle betragsmässige Reduktion eines an der Abtriebswelle der elektrischen Asynchronmaschine anliegenden Lastmomentes zu verstehen. Dies kann insbesondere dann auftreten, wenn bei einem Fahrzeugantrieb ein Antriebsrad Traktion verliert und insbesondere von der Haftreibung in die Gleitreibung wechselt. Beispielsweise soll beim Traktionsverlust an einem Antriebsstrang, wobei ein Antriebsstrang eine elektrische Asynchronmaschine sowie wenigstens ein mit dem Rotor der elektrischen Asynchronmaschine mechanisch gekoppeltes Rad umfasst, das Antriebsmoment oder Bremsmoment in geeigneter Weise nachgestellt werden. In einer weiteren Sichtweise sollen ruckartige Belastungen des Antriebs beim Ausschlupfen eines Antriebsrades, oder gar ein Rattern des Antriebs vermieden werden. Gemäss noch einer Sichtweise soll sichergestellt werden, dass die Leistung eines Fahrzeugantriebs soweit irgend möglich in Vortrieb umgesetzt werden kann. Gemäss einem weiteren Aspekt soll auch ein unkontrolliertes Durchdrehen einer wechselrichtergesteuerten und momentengeregelt betriebenen Asynchronmaschine verhindert werden.

Dies wird mittels des im Anspruch 1 angegebenen Verfahrens erreicht.

Weitere Wirkungen und Vorteile der hier beschriebenen Gegenstände, ob explizit angegeben oder nicht, ergeben sich im Lichte der vorliegenden Beschreibung.

Beschrieben ist demnach ein Verfahren zum Betrieb einer elektrischen Asynchronmaschine, die einen Rotor und einen Stator umfasst. Das Verfahren umfasst, an einer Statorwicklung eine Statorspannung anzulegen, wobei die Statorspannung eine Wechselspannung mit einer Stator-Spannungsamplitude und einer Statorfrequenz ist. Das Verfahren umfasst weiterhin, die elektrische Asynchronmaschine in einem Arbeitspunkt zu betreiben, bei dem an die Statorwicklung eine Wechselspannung mit einer ersten Stator-Spannungsamplitude und einer ersten Statorfrequenz angelegt wird, wodurch ein Stator-Wechselstrom mit einer Stator-Stromamplitude fliesst. Dabei wird ein Drehmoment an einer Abtriebswelle der Asynchronmaschine erzeugt. Beispielsweise dreht sich der Rotor, je nach Betriebsweise der Asynchronmaschine, mit einer Soll-Drehzahl und und/oder erzeugt ein Soll-Drehmoment. Das von der Asynchronmaschine erzeugte Drehmoment bezieht sich dabei auf das nutzbare Drehmoment, dass an einer Abtriebswelle der Asynchronmaschine zur Verfügung steht. Dieses kann sich insofern von dem total erzeugten Drehmoment unterscheiden, als, wie dem Fachmann ohne weiteres eingängig ist, beim Bremsen oder Beschleunigen eines Fahrzeugs ein gewisser, wenn auch an sich vernachlässigbar kleiner, Teil des gesamthaft am Umfang des Rotors erzeugten Drehmomentes zum Verzögern oder Beschleunigen des Rotors selbst benötigt wird, und weiterhin die Lagerung des Rotors zwangsläufig reibungsbehaftet ist. Der Rotor dreht sich mit einer Rotordrehzahl. Dem von der Asynchronmaschine erzeugten Drehmoment wirkt an der Abtriebswelle ein Lastmoment entgegen, welches betragsmässig gleich dem erzeugten Drehmoment ist, diesem aber entgegengerichtet ist. Das von der Asynchronmaschine erzeugte Drehmoment kann dabei ein Antriebsmoment sein, wenn die Asynchronmaschine beispielsweise zum Antreiben eines Fahrzeugs verwendet wird, wobei im genannten Fall die Rotordrehzahl kleiner als die Statorfrequenz ist. Andererseits kann das von der Asynchronmaschine erzeugte Drehmoment auch ein Bremsmoment sein, wenn die Asynchronmaschine beispielsweise im Bremsbetrieb zum Verzögern eines Fahrzeugs betrieben wird, wobei die Rotordrehzahl grösser als die Statorfrequenz ist. Beispielsweise ist beim Antrieb eines Fahrzeugs mit Adhäsionsantrieb die Abtriebswelle mit einem Antriebsrad gekoppelt. Solange sich dieses mit dem Untergrund in Haftreibung befindet, wird das gesamte Drehmoment an der Abtriebswelle zum Vortrieb und ggf. zum Beschleunigen oder Bremsen eingesetzt, und dem Drehmoment an der Abtriebswelle wirkt ein entsprechendes Lastmoment entgegen.Es wird im hier angegebenen Verfahren weiterhin bestimmt, ob ein Lastverlust-Zustand vorliegt. Dazu kann insbesondere als Teilprozess des gesamten beschriebenen Betriebsverfahren ein Verfahren durchgeführt werden, das die Detektion eines Lastverlust-Zustandes ermöglicht. In einem Lastverlust-Zustand ist der Betrag des Lastmoments kleiner als der Betrag des erzeugten Drehmoments an der Abtriebswelle, derart, dass sich die Drehzahl des Rotors der Asynchronmaschine sehr schnell verändert und der Statorfrequenz annähert, die Rotorfrequenz also gegen Null geht. Beim Antrieb eines Fahrzeugs wäre das Antriebrad demnach in Gleitreibung, das Lastmoment ist kleiner als das Moment an der Abtriebswelle, und eine Antriebsachse schleudert. Gemäss dem hier beschriebenen Verfahren wird in einem Lastverlust-Zustand die Statorfrequenz gleichsinnig mit der Änderung der Rotordrehzahl verändert. Das heisst, wenn die Asynchronmaschine zum Antrieb betrieben wird, wird die Statorfrequenz bei Lastverlust erhöht, während sie im Bremsbetrieb bei Lastverlust vermindert wird.

In einer möglichen Ausgestaltung des Verfahrens wird die Statorfrequenz derart verändert, dass die Rotorfrequenz konstant gehalten wird. Hieraus resultiert ein Abfall des Drehmoments und der Amplitude des Statorstroms mit steigender Rotorfrequenz.

Insbesondere wird die Asynchronmaschine bei Lastverlust derart betrieben, dass das von der Asynchronmaschine erzeugte Drehmoment mit einer Erhöhung der Rotordrehzahl asymptotisch gegen Null strebt. Es wird derart die Asynchronmaschine entlang einer vom Fachmann als Reihenschluss-Kennlinie bezeichneten Momentenkennlinie betrieben.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

Festzuhalten ist, dass das Verfahren zwei selektiv einzustellende Betriebsmodi der Asynchronmaschine umfasst. Diese werden je nachdem, ob ein Lastverlust der Asynchronmaschine, beispielsweise ein Traktionsverlust an einem Antriebsstrang bei einem Fahrzeugantrieb, erkannt wurde oder nicht, ausgewählt. Wenn also kein Lastverlust vorliegt, so wird die Statorfrequenz nach einem der an sich bekannten Steueralgorithmen eingestellt bzw. geregelt. Wenn ein Lastverlust vorliegt, wird die Statorfrequenz derart nachgeregelt, dass einerseits die Rotorfrequenz nicht zu Null wird und andererseits die Maschine nicht unkontrolliert durchdreht.

Das Verfahren kann, wie erwähnt, beim Betrieb der elektrischen Asynchronmaschine sowohl zum Antrieb, das heisst, die Statorfrequenz ist grösser als die Drehzahl des Rotors, als auch im Bremsbetrieb, das heisst die Statorfrequenz ist kleiner als die Rotordrehzahl, Anwendung finden. Das heisst, die elektrische Asynchronmaschine kann grundsätzlich zum Antrieb betrieben werden, wobei sie ein nutzbares Drehmoment abgibt, oder zum Bremsen, wobei sie ein Drehmoment abstützt.

Das Betriebsverfahren ermöglicht es, bei einem Lastverlust der Asynchronmaschine diese derart zu betreiben, dass das Drehmoment der Asynchronmaschine, ob Antriebsmoment oder Bremsmoment, mit zunehmender Abweichung der Ist-Drehzahl des Rotors von der Soll-Drehzahl des Rotors betragsmässig kleiner wird, aber nicht zu Null wird. Insbesondere ist es ermöglicht, dass der Betrag des Drehmoments ausgehend vom Wert vor dem Lastverlust stetig und kontinuierlich reduziert wird, bis zu einem Wert, an dem das Drehmoment beispielsweise bei einem Fahrzeugantrieb wieder durch Gleitreibung übertragen werden kann; dann erfolgt keine weitere Erhöhung der Rotordrehzahl mehr. Hiermit unterscheidet sich das vorgestellte Verfahren grundlegend von den bekannten Betriebsverfahren. Wenn nämlich die Asynchronmaschine bei dem Verfahren nach dem Stand der Technik zur Konstanthaltung der Drehzahl, das heisst mit einer konstanten oder beispielsweise beim Beschleunigen eines Fahrzeuges langsam zu verändernden Statorfrequenz betrieben wird, reduziert sich das Drehmoment der Asynchronmaschine nahezu augenblicklich auf Null. Wenn die Asynchronmaschine hingegen entlang einer vorgegebenen Momentenkennlinie betrieben wird, beschleunigt der Rotor extrem stark, ohne dass entsprechend eingegriffen würde. Weitere bekannte Verfahren reduzieren bei Erkennen eines Lastverlusts unmittelbar das Drehmoment und/oder die Amplitude des Statorstroms. Damit wird aber beispielsweise die Zugkraft eines Fahrzeugs gerade beim Beschleunigen stärker vermindert, als dies notwendig wäre. Ebenso können auch hieraus starke mechanische Wechselbelastungen von leistungsübertragenden Bauteilen resultieren, die deren Lebensdauer verkürzen. Das beschriebene Verfahren hingegen ermöglicht es, bei einem Lastverlust das Drehmoment stetig und vergleichsweise langsam zu reduzieren. Damit werden einerseits mechanische Wechselbelastungen im Antriebsstrang signifikant reduziert. Andererseits wird einer unkontrollierten Drehzahlerhöhung entgegengewirkt. Beispielsweise erzeugt die Asynchronmaschine bei Lastverlust noch ein Drehmoment, und in Fahrzeugantrieben werden Übergänge zwischen Bereichen guter Traktion und schlechter Traktion sanft gestaltet. Dies zeigt sich insbesondere bei Fahrzeugantrieben vorteilhaft, bei denen eine Mehrzahl von Antriebssträngen mit einer Mehrzahl von Asynchronmaschinen angeordnet sind, wobei jede Asynchronmaschine auf einen Antriebsstrang wirkt, und insbesondere dann, wenn einzelne dieser Antriebsstränge einen Antriebsschlupf entwickeln.

In einer Ausgestaltung des Verfahrens umfasst das Bestimmen des Lastzustandes, also die Bestimmung, ob ein Lastverlust-Zustand vorliegt oder nicht, eine Soll-Drehzahl des Rotors zu bestimmen und eine Ist-Drehzahl des Rotors zu bestimmen. Das Kriterium, um einen Lastverlust zu erkennen, ist, ob die Ist-Drehzahl der Soll-Drehzahl entspricht. In der praktischen Anwendung wird es sich als sinnvoll erweisen, ein Drehzahl-Toleranzband zu bestimmen bzw. vorzugeben, wobei ein Lastverlust dann erkannt wird, wenn die Drehzahlabweichung ausserhalb des Drehzahl-Toleranzbandes liegt. Insofern umfasst das Verfahren, einen Drehzahl-Toleranzwert vorzugeben, und eine Drehzahlabweichung als Differenz von Ist-Drehzahl abzüglich Soll-Drehzahl zu bilden, wobei, wenn ein Absolutwert oder Betrag der Drehzahlabweichung den Drehzahl-Toleranzwert überschreitet, der Lastverlust-Zustand detektiert wird. Der Drehzahl-Toleranzwert kann auch 0 sein; somit umfasst das beschriebene Verfahren auch den Fall, dass nicht mit einem Drehzahl-Toleranzband gearbeitet wird.

Es ist eine Frage der Sichtweise ob, falls der Betrag der Drehzahlabweichung gleich dem Drehzahl-Toleranzwert ist, dies bereits einem Lastverlust-Zustand zuzurechnen ist oder nicht; an den zugrundeliegenden Funktionsprinzipien ändert dies nichts.

Das Bestimmen des Lastzustandes, also zu erkennen, ob ein Lastverlust vorliegt oder nicht, kann umfassen, einen Gradienten der Ist-Amplitude des Statorstroms über der Zeit zu bestimmen, wobei der Lastverlust-Zustand detektiert wird, wenn ein Absolutwert des Gradienten des Istwertes der Stator-Stromamplitude über der Zeit einen Grenzwert überschreitet. Dieses Verfahren macht sich zu Nutze, dass bei einer Annäherung der Rotordrehzahl an die Statorfrequenz die Amplitude des Statorstroms bei abnehmender Rotorfrequenz mit einem sehr steilen Gradienten abnimmt. Auch hier ist es eine Frage der Definition, ob das Erreichen des Grenzwertes bereits dem Lastverlust-Zustand zuzurechnen ist oder nicht.

Die Statorfrequenz wird in beispielhaften Ausgestaltungen des Verfahrens im Lastverlust-Zustand derart variiert, dass die Stator-Stromamplitude auf einen Sollwert eingeregelt wird. In einer spezifischen Ausgestaltung umfasst das Verfahren, die Statorfrequenz derart zu variieren, dass die Stator-Stromamplitude konstant gehalten wird. Dieses Verfahren ist insbesondere dann anwendbar, wenn die Asynchronmaschine zum Antrieb betrieben wird, also die Statorfrequenz grösser ist als die Rotordrehzahl. In diesem Falle wird nämlich die Statorfrequenz im Lastverlust-Zustand erhöht, womit sich bei konstanter Stator-Stromamplitude und konstanter Amplitude der Statorspannung das Antriebsmoment verringert. Dabei kann einerseits die Stator-Stromamplitude auf dem Wert gehalten werden, den sie vor dem Lastverlust hatte, kann andererseits aber auch auf einen gewissen Bruchteil dieses Wertes reduziert werden, wodurch eine sofortige Verminderung des Antriebsmoments eintritt.

In weiteren spezifischen Ausgestaltungen des Verfahrens wird der Sollwert der Stator-Stromamplitude als Funktion einer Abweichung einer Ist-Drehzahl des Rotors von der Soll-Drehzahl des Rotors vorgegeben. In noch spezifischeren Ausgestaltungen wird der Sollwert der Stator-Stromamplitude als monoton fallende Funktion der genannten Drehzahlabweichung vorgegeben. Auch in diesem Falle erfolgt die genannte Verminderung der Stator-Stromamplitude ausgehend von dem Wert, den die Stator-Stromamplitude vor dem Eintreten des Lastverlusts hatte. Dies wird, wie oben bereits erwähnt, beispielsweise dann erreicht, wenn beim motorischen Betrieb, also Statorfrequenz grösser als Rotordrehzahl, in einer regelungstechnisch sehr einfachen Ausgestaltung des Verfahrens die Differenz zwischen der Rotordrehzahl und der Statorfrequenz konstant gehalten wird und gleichzeitig die Amplitude der Statorspannung konstant gehalten wird.

Es erschliesst sich vollkommen zwanglos, dass es insbesondere mit den oben genannten Verfahren zur Einstellung der Stator-Stromamplitude bestens ermöglicht ist, Betriebskennlinien der Asynchronmaschine einzustellen, bei denen der Betrag des Drehmoments der Asynchronmaschine, ob Antriebsmoment oder Bremsmoment, beim Lastverlust kontrolliert reduziert wird, aber in keinem Fall zu Null wird. Es ist insbesondere mit den genannten Verfahren zur Einstellung der Stator-Stromamplitude ermöglicht, die Maschine derart zu betreiben, dass beim Lastverlust das Drehmoment der Asynchronmaschine mit zunehmender Abweichung der Ist-Drehzahl von der Soll-Drehzahl asymptotisch gegen Null strebt.

Es kann weiterhin vorgesehen sein, die Statorfrequenz im Lastverlust-Zustand derart zu verändern, dass die Differenz von Statorfrequenz abzüglich Rotordrehzahl stets innerhalb eines vorgegebenen Bandes gehalten wird. Damit wird verhindert, dass die Rotorfrequenz grösser als die Kipp-Rotorfrequenz wird. Dies ist in jedem Fall zu verhindern, um sicherzustellen, dass die Asynchronmaschine stets in einem Betriebsbereich zwischen den Drehzahlen des maximalen Drehmoments bei einer gegebenen Statorfrequenz verbleibt und nicht potenziell instabile Betriebszustände erreicht werden.

In einer weiteren Ausgestaltung umfasst das Verfahren, im Lastverlust-Zustand die Stator-Spannungsamplitude unabhängig von der Statorfrequenz einzustellen. Dies erfolgt insbesondere auch in einem Bereich der Statorfrequenz, indem die Asynchronmaschine im Nennbetrieb mit konstanter Statorflussverkettung, d. h. mit einer proportional zur Statorfrequenz ansteigenden Stator-Spannungsamplitude, betrieben würde.

Es kann vorgesehen sein, dass im Lastverlust-Zustand die Statorspannung wenigstens über ein Zeitintervall konstant gehalten wird. Die Amplitude der Statorspannung wird in diesem Falle wenigstens über ein Zeitintervall also auf dem Wert gehalten, den sie aufwies, unmittelbar bevor der Lastverlust-Zustand detektiert wurde.

Es kann auch vorgesehen sein, im Lastverlust-Zustand, die Amplitude der Statorspannung als Funktion einer Soll-Drehzahl vorzugeben. Dies kann zum Beispiel bedeuten, dass, wenn ein Traktionsverlust beim Beschleunigen oder Verzögern eines Fahrzeugs auftritt, die Amplitude der Statorspannung derart nachgeführt wird, dass sie dem Wert entspricht, der vorläge, falls der Antriebsstrang, in dem die Asynchronmaschine angeordnet ist, in voller Traktion liefe. Diese Nachführung der Statorspannung kann kontinuierlich oder schrittweise erfolgen.

Wie oben bereits impliziert, kann die elektrische Asynchronmaschine Bestandteil eines Antriebssystems für ein Fortbewegungsmittel, beispielsweise ein Fahrzeug, sein. Das Verfahren kann insofern umfassen, die Soll-Drehzahl in Abhängigkeit von der Fortbewegungsgeschwindigkeit des Fortbewegungsmittels zu bestimmen. Die Fortbewegungsgeschwindigkeit kann beispielsweise über eine Radar- oder GPS-Messung ermittelt werden. Sie könnte beispielsweise auch über die Drehzahl einer geschleppten Achse bestimmt werden.

In einem Antriebssystem, in dem mehrere elektrische Asynchronmaschinen auf unterschiedliche Antriebsstränge wirken, kann zur Bestimmung der Fortbewegungsgeschwindigkeit die Drehzahl des Rotors derjenigen elektrischen Asynchronmaschine herangezogen werden, deren Rotor, unter Berücksichtigung der Übersetzungsverhältnisse und der Antriebsraddurchmesser, beim Betrieb der elektrischen Asynchronmaschine als Antriebsaggregat am langsamsten dreht, das heisst, bei der am Antriebsrad die geringste Umfangsgeschwindigkeit vorliegt. Es wird in diesem Falle vermutet, dass dieses Rad noch Traktion hat bzw. dass an diesem Rad der geringste Antriebsschlupf vorliegt. Es versteht sich, dass im Bremsbetrieb umgekehrt die Bewegungsgeschwindigkeit aus der Drehzahl des Rotors derjenigen elektrischen Asynchronmaschine herangezogen wird, deren Rotor unter Berücksichtigung der Übersetzungsverhältnisse und Antriebsraddurchmesser am schnellsten dreht.

Das hier beschriebene Verfahren kann weiterhin umfassen, die elektrische Asynchronmaschine als Bestandteil eines Antriebssystems für ein Fahrzeug zu betreiben, wobei innerhalb des Fahrzeugs eine Mehrzahl von Antriebssträngen angeordnet ist. Dabei ist in jedem Antriebsstrang wenigstens eine elektrische Asynchronmaschine mit wenigstens einem Antriebsrad derart gekoppelt, dass ein Drehmoment zwischen dem Rotor der Asynchronmaschine und dem Antriebsrad übertragbar ist. Dies ist beispielsweise bei der Anwendung des Verfahrens in heute üblichen Elektrolokomotiven oder elektrisch angetriebenen Triebwagen mit Einzelachsantrieb der Fall.

Dabei umfasst das Verfahren in einer beispielhaften Ausführungsform, die elektrischen Asynchronmaschinen zum Antrieb zu betreiben. Die Bestimmung der Soll-Drehzahl für jede elektrische Asynchronmaschine umfasst, aus einer Ist-Drehzahl an jedem Antriebsstrang sowie dem Radumfang des jeweiligen Antriebsrades eine Ist-Radumfangsgeschwindigkeit zu ermitteln. Insofern ist ohne Weiteres verständlich, dass, falls die Asynchronmaschinen zum Antrieb betrieben werden, derjenige Antriebsstrang mit der geringsten Rad-Umfangsgeschwindigkeit den geringsten Antriebsschlupf aufweist oder idealerweise schlupffrei betrieben wird, so, dass dieser eine tatsächliche Fahrgeschwindigkeit wiedergibt oder zumindest in der besten Näherung wiedergibt. Es wird demnach derjenige Antriebsstrang, für den die geringste Ist-Rad-Umfangsgeschwindigkeit ermittelt wird, als Referenz-Antriebsstrang herangezogen. Die Soll-Drehzahl der elektrischen Asynchronmaschine an jedem Antriebsstrang wird als diejenige Drehzahl ermittelt, die sich unter Berücksichtigung der jeweiligen Übersetzungsverhältnisse und des Radumfangs des jeweiligen Antriebsrades ergäbe, wenn die Rad-Umfangsgeschwindigkeit am jeweiligen Antriebsrad der Rad-Umfangsgeschwindigkeit am Referenz-Antriebsstrang entspräche.

Wenn die elektrischen Asynchronmaschinen zum Bremsen betrieben werden, umfasst die Bestimmung der Soll-Drehzahl ebenfalls, aus einer Ist-Drehzahl an jedem Antriebsstrang sowie dem Radumfang des jeweiligen Antriebsrades eine Ist-Radumfangsgeschwindigkeit zu ermitteln. Allerdings wird derjenige Antriebsstrang, für den die grösste Ist-Radumfangsgeschwindigkeit ermittelt wird, als Referenz-Antriebsstrang herangezogen, und die Soll-Drehzahl der elektrischen Asynchronmaschine an jedem Antriebsstrang wird wiederum als diejenige Drehzahl bestimmt, die sich unter Berücksichtigung der jeweiligen Übersetzungsverhältnisse und des Radumfangs des jeweiligen Antriebsrades ergäbe, wenn die Rad-Umfangsgeschwindigkeit am jeweiligen Antriebsrad der Rad-Umfangsgeschwindigkeit am Referenz-Antriebsstrang entspräche.

Die Statorfrequenz wird insbesondere durch einen Wechselrichter gesteuert. Der Wechselrichter stellt insbesondere eine Wechselspannung mit variabler Amplitude und Frequenz für die Versorgung der Wicklungen des Stators bereit.

Es ist weiterhin ein Verfahren zum Betrieb eines Schienenfahrzeugs beschrieben, wobei das Schienenfahrzeug wenigstens einen Antriebsstrang aufweist, in dem eine Asynchronmaschine mit einem Antriebsrad mechanisch zur Übertragung eines Drehmoments zwischen dem Antriebsrad und dem Rotor der Asynchronmaschine gekoppelt ist, und wobei die Asynchronmaschine nach einem Verfahren der oben beschriebenen Art betrieben wird.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: beispielhafte Momentenkennlinien einer Asynchronmaschine bei einer festen Statorfrequenz und konstanter Stator-Spannungsamplitude und konstanter Stator-Stromamplitude über der Rotorfrequenz;
- Fig. 2: eine qualitative Darstellung des Verlaufs der Amplitude des Statorstroms als Funktion der Rotorfrequenz bei konstanter Statorfrequenz und konstanter Stator-Spannungsamplitude;
- Fig. 3: den qualitativen Verlauf des Statorstroms über der Rotorfrequenz bei unterschiedlichen Statorfrequenzen sowie den Verlauf bei Konstanthaltung der Rotorfrequenz, jeweils bei konstanter Stator-Spannungsamplitude;
- Fig. 4: beispielhafte Verläufe von Momentenkennlinien einer Asynchronmaschine bei unterschiedlichen Statorfrequnzen als Funktion der Rotordrehzahl, sowie einen resultierenden Verlauf von Traktionskennlinien eines Antriebs einerseits beim Betrieb zum Antrieb und andererseits beim Betrieb zum Bremsen;
- Fig. 5: den Verlauf der Rotorfrequenz über der Rotordrehzahl zur Realisierung der Traktionskennlinien aus Fig. 4;
- Fig. 6: eine Momentenkennlinie einer Asynchronmaschine bei konstanter Statorfrequenz und Amplitude der Statorspannung, sowie beispielhafte Trajektorien des Betriebspunktes beim Lastverlust ausgehend von dieser Kennlinie, wie sie beim Betrieb nach dem hier beschriebenen Verfahren beim Lastverlust resultieren;
- Fig. 7: ein vereinfachtes beispielhaftes Blockschaltbild zur Regelung der Stator-Stromamplitude, wie es beispielsweise zur Realisierung eines hier beschriebenen Verfahrens Verwendung finden kann;
- Fig. 8: ein vereinfachtes beispielhaftes Blockschaltbild zur Steuerung der Stator-Spannungsamplituden bei einem Mehrmotorantrieb, welches für ein Verfahren der vorliegend beschriebenen Art geeignet ist.
Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

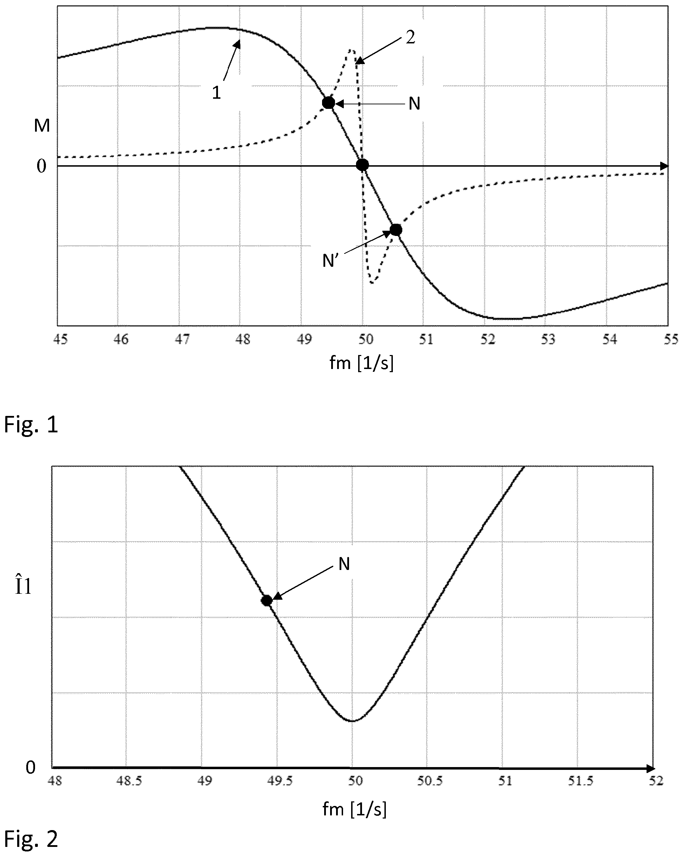

In der Figur 1 ist ein beispielhafter qualitativer Verlauf des Drehmoments M einer elektrischen Asynchronmaschine über der Rotordrehzahl fm in 1/s bei Konstanthaltung verschiedener elektrischer Grössen dargestellt. Die Frequenz der am Stator angelegten Wechselspannung ist dabei 50 Hz. Die mit 1 bezeichnete Kennlinie stellt den Drehmomentverlauf bei konstanter Amplitude der Statorspannung dar. Die mit 2 bezeichnete Kennlinie stellt den Verlauf des Drehmoments bei konstanter Amplitude des Statorstroms dar. N bezeichnet den Arbeitspunkt im Antriebsbetrieb, wobei die Rotordrehzahl kleiner ist als die Statorfrequenz. N' bezeichnet den Arbeitspunkt beim Bremsbetrieb, wobei die Rotordrehzahl grösser ist als die Statorfrequenz und ein von aussen aufgebrachtes Drehmoment von der elektrischen Asynchronmaschine abgestützt wird. Zu beachten ist hierbei, dass die Kennlinie mit konstanter Amplitude des Statorstroms nur bei Rotorfrequenzen genutzt werden kann, die grösser sind als die Rotorfrequenz in den Arbeitspunkten N und N', bzw. bei Rotordrehzahlen, die entweder kleiner sind als die des motorischen Arbeitspunktes N oder grösser als die der generatorischen Arbeitspunktes N'. Zwischen den Arbeitspunkten muss die Stator-Stromamplitude im Leerlauf auf den Magnetisierungswert reduziert werden. Wenn die Rotordrehzahl der Statorfrequenz entspricht, bewegen sich die Leiter im Rotor nicht mehr relativ zum Drehfeld des Stators, weshalb keine Spannung in den Leitern des Rotors induziert wird und weshalb das Drehmoment zu Null wird. Erkennbar ist, dass in jedem Falle im Arbeitspunkt der Asynchronmaschine der Gradient des Drehmoments über der Drehzahl bei der Kennlinie konstanter Amplitude der Statorspannung sehr steil verläuft, derart, dass beispielsweise im dargestellten Ausführungsbeispiel eine relative Veränderung der Rotordrehzahl um etwas mehr als 1% zur Statorfrequenz hin einen Zusammenbruch des Drehmoments auf Null zur Folge hat. Dieser Fall stellt sich beispielsweise beim Antrieb eines Bahnbetriebsfahrzeugs mit Einzelachs-Adhäsionsantrieb schnell einmal ein, und wird auch beim sogenannten Gruppenantrieb beobachtet, beispielsweise bei nassen oder gar vereisten Schienen. Sobald das Drehmoment bzw. die dem Drehmoment entsprechende Umfangskraft am Antriebsrad nicht mehr auf die Schiene übertragen werden kann, beginnt die entsprechende Antriebsachse durchzudrehen und die Kraftübertragung zwischen dem Rad und der Schiene wechselt von Haftreibung auf Gleitreibung, also der Antrieb beginnt zu schleudern, weshalb die übertragbare Zugkraft weiter drastisch sinkt. Das Drehmoment sinkt stark ab bis zu dem Wert, der über Gleitreibung übertragbar wäre. Sobald wieder ein höherer Reibwert zwischen Rad und Schiene vorliegt, wird die entsprechende Antriebsachse wieder extrem stark abgebremst, da ja das Antriebsmoment sehr stark gesunken ist, bis zu einem Punkt, bei dem die Umfangsgeschwindigkeit an den Antriebsrädern der entsprechenden Achse wieder der Fahrgeschwindigkeit entspricht und die Kraftübertragung zwischen Rad und Schiene wieder im Zustand der Haftreibung erfolgt. Wie leicht nachvollziehbar ist, können sich in diesen Betriebszuständen stark dynamische und transiente Drehmomentverläufe ergeben, welche mechanische Komponenten zur Kraftübertragung innerhalb eines Antriebsstrangs von der elektrischen Asynchronmaschine bis zum Rad stark beanspruchen.

In der Figur 2 ist qualitativ dargestellt, wie sich die Amplitude des Statorstroms Î1 bei einer konstanten Statorfrequenz von 50 Hz bei einer Veränderung der Rotordrehzahl fm verändert. Bei einer Abweichung der Rotordrehzahl vom Arbeitspunkt N und einer Erhöhung der Rotordrehzahl fällt die Amplitude des Statorstroms im motorischen Teil der Kennlinie, also im linken Ast des "V", steil ab, erreicht bei Gleichheit von Statorfrequenz und Rotordrehzahl ein Minimum im Leerlauf, und steigt bei weiterer Erhöhung der Rotordrehzahl im generatorischen Teil der Kennlinie wieder an.

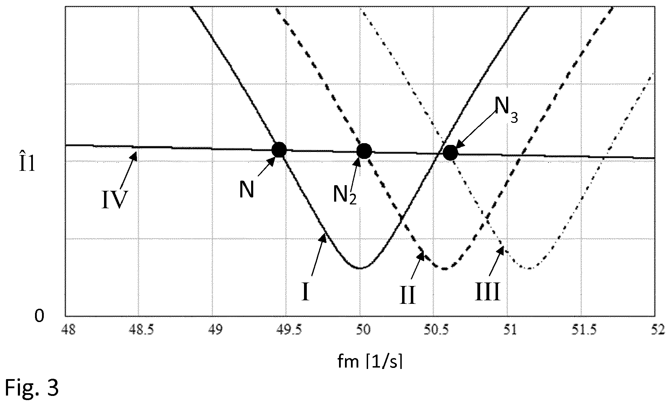

Figur 3 zeigt eine qualitative Darstellung des Verlaufs der Amplitude des Statorstroms Î1 über der Rotordrehzahl fm für 3 unterschiedliche Statorfrequenzen. In der mit I gekennzeichneten Kurve beträgt die Statorfrequenz 50 Hz, bei der mit II gekennzeichneten Kurve beträgt die Statorfrequenz 50,57 Hz, und bei der mit III gekennzeichneten Kurve beträgt die Statorfrequenz 51,14 Hz. N, N₂ und N₃ kennzeichnen Arbeitspunkte bei den genannten Statorfrequenzen, wobei die Differenz zwischen der Statorfrequenz und der Rotordrehzahl, also die Rotorfrequenz, konstant bei 0,57 Hz gehalten wurde. In diesem Zusammenhang sei zu der hier verwendeten Nomenklatur angemerkt, dass insbesondere bei einer mechanischen Komponente eine Drehfrequenz und eine Drehzahl an sich äquivalent sind. Es wurde eine Nomenklatur gewählt, bei der hinsichtlich elektrischer Grössen von der Frequenz die Rede ist, während hinsichtlich der mechanischen Grössen die Bezeichnung Drehzahl gewählt wurde, um diesbezüglich eine klare Unterscheidung zu treffen. Denn die Rotorfrequenz bezeichnet die Frequenz der in den Leitern des Rotors induzierten Wechselspannung, und entspricht der Differenz von Statorfrequenz und Rotordrehzahl. Die Frequenzen sind in der Einheit Hz angegeben, während für die Drehzahl die Einheit 1/s gewählt wurde, wobei für den Fachmann klar ist, dass beide Einheiten identisch sind, also 1 Hz = 1/s. Bei IV ist eine Linie bezeichnet, entlang der sich die Amplitude des Statorstroms mit der Rotordrehzahl verändert, wenn die Differenz zwischen der Statorfrequenz und der Rotordrehzahl, mithin also die Rotorfrequenz, konstant gehalten wird.

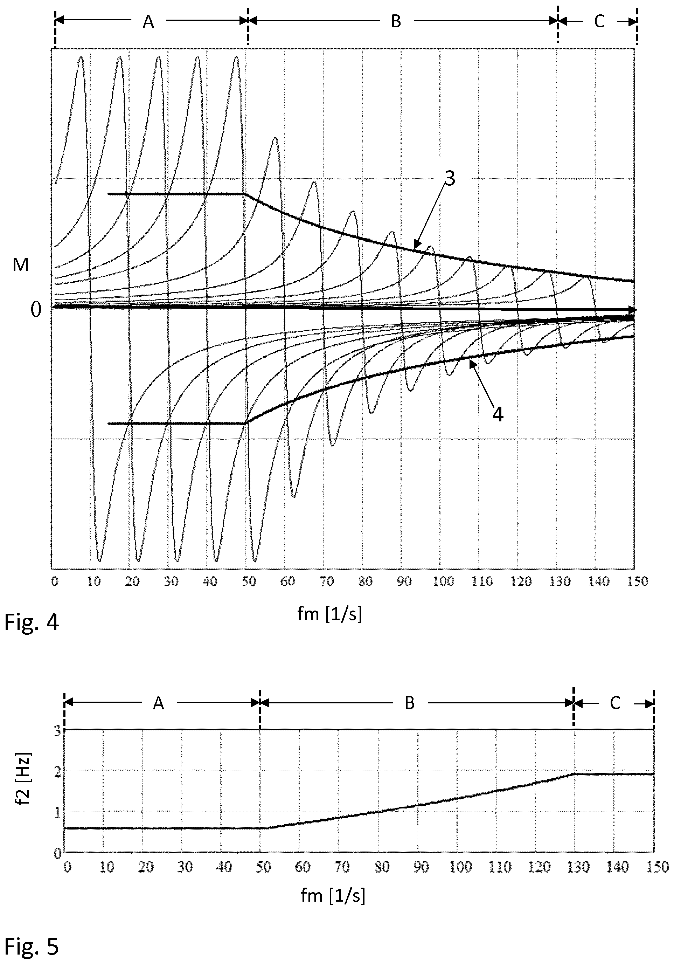

In Figur 4 ist eine Anzahl von qualitativen Drehmomentkennlinien bei unterschiedlichen Statorfrequenzen als Funktion der Rotordrehzahl fm dargestellt. Bei den unterschiedlichen Frequenzen wird die Amplitude der Statorspannung abhängig von der Statorfrequenz eingestellt. In einem ersten Bereich, mit A gekennzeichnet, wird die Statorflussverkettung konstant gehalten. Damit ist die Amplitude der Statorspannung proportional zur Statorfrequenz. In einem zweiten, mit B gekennzeichneten, Bereich werden die Amplitude der Statorspannung wie auch die Amplitude des Statorstroms konstant gehalten. Die Regelung des Statorstroms erfolgt mit der Rotorfrequenz als Stellgrösse. In einem dritten Bereich, mit C gekennzeichnet, werden die Amplitude der Statorspannung und die Rotorfrequenz konstantgehalten. Mit 3 ist eine auch als Traktionskennlinie bezeichnete Kennlinie des Drehmoments im Betrieb zum Antrieb, also, wenn der Rotor dem Drehfeld des Stators nacheilt, dargestellt, wie sie sich ergibt, wenn die Arbeitspunkte aller Drehmomentkennlinien für eine feste Frequenz miteinander verbunden werden. Eine analoge Drehmomentkennlinie für den Bremsbetrieb ist bei 4 dargestellt. Die Figur 5 zeigt, dass die Rotorfrequenz als Differenz zwischen der Statorfrequenz und der Rotordrehzahl im ersten Bereich A konstant bleibt, während sie im zweiten Bereich B ansteigt, um gemäss einer hier beispielhaft herangezogenen Regelstrategie die Amplitude des Statorstroms und bei einer anderen möglichen Steuerstrategie die abgegebene mechanische Leistung konstant zu halten. In einem dritten Bereich C ist die Statorfrequenz wiederum konstant. Dies ist unter anderem dadurch bedingt, dass die Rotorfrequenz nicht grösser werden darf als der Abstand zwischen der synchronen Rotordrehzahl, die der Statorfrequenz entspricht, und der Drehzahl, an der das höchste Drehmoment vorliegt, also der Drehzahl am Kipppunkt. Mit Vorteil wird die Rotorfrequenz stets auf einen kleineren Wert limitiert, als der genannte Abstand zwischen der synchronen Drehzahl und der Drehzahl am Kipppunkt, um eine gewisse Sicherheitsmarge gegen einen instabilen Betrieb zu wahren.

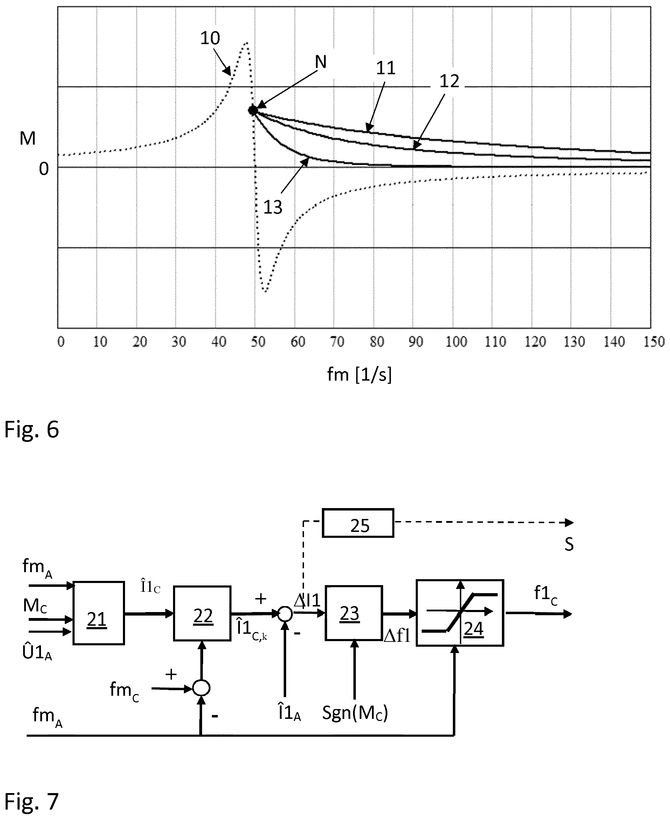

Figur 6 zeigt bei 10 den qualitativen Verlauf des Drehmoments M im Betrieb einer elektrischen Asynchronmaschine als Antrieb über der Rotordrehzahl fm bei einer konstanten Statorfrequenz von 50 Hz. N bezeichnet einen Arbeitspunkt. Die Drehmomentverläufe, die mit 11,12 und 13 gekennzeichnet sind, stellen Trajektorien der Arbeitspunkte dar, wie sie gemäss dem hier vorgeschlagenen Verfahren erzeugt werden, falls ein Lastverlust auftritt. In jeder dieser Kennlinien wird bei Erkennen eines Lastverlusts die Statorfrequenz erhöht während die Amplitude der Statorspannung beispielsweise konstant gehalten wird. Die mit 11 gekennzeichnet Kennlinie ergibt sich, wenn die Amplitude des Statorstroms konstant gehalten wird. Dies wird beispielsweise dadurch erreicht, dass ein Regler für den Sollwert der Stromamplitude am Stator auf eine dem Verfahren entsprechende Weise auf die Rotorfrequenz und damit auch auf die Statorfrequenz als Stellgrösse eingreift. Die Kennlinien, die mit 12 und 13 gekennzeichnet sind, ergeben sich, wenn die Amplitude des Statorstroms sukzessive mit zunehmender Differenz der Rotordrehzahl und/oder der Statorfrequenz zu dem sich am langsamsten drehenden Motor durch Eingriffe in die Statorfrequenz verringert wird.

Dies ist in der Figur 7 dargestellt. Eine Operationseinheit 21 erhält als Eingangsgrössen einen Sollwert M_{C} für das Drehmoment, einen Istwert Û1_{A} der Amplitude der Statorspannung, sowie den Istwert fm_{A} der Rotordrehzahl. Daraus berechnet die Operationseinheit 21 einen Sollwert Î1_{C} für die Amplitude des Statorstroms. Der Funktionsblock 22 kommt an sich erst im Lastverlust-Zustand zum Tragen. Abhängig von einer Abweichung der Ist-Rotordrehzahl fm_{A} von der Soll-Rotordrehzahl fm_{C} erfolgt gemäss einer Variante des hier beschriebenen Verfahrens eine Verminderung des Sollwerts der Amplitude des Statorstroms auf den korrigierten Wert Î1_{C,k}. Diese kontrollierte Verminderung der Statorstrom-Amplitude resultiert in Momentenkennlinien, wie sie in der Figur 6 bei 12 und 13 dargestellt sind. Wenn kein Lastverlust-Zustand vorliegt, erfolgt diese Verminderung nicht, da der Drehzahl-Istwert gleich dem Drehzahl-Sollwert ist, und der Wert Î1_{C,k} ist gleich dem Wert Î1_{C}. Der Funktionsblock 22 umfasst beispielsweise ein Totband, wobei bei Drehzahlabweichungen innerhalb dieses Totbandes keine Korrektur der Statorstrom-Amplitude erfolgt. Durch einen Vergleich des korrigierten Wertes der Statorstrom-Amplitude Î1_{C,k} mit einem Istwert der Statorstrom-Amplitude Î1_{A} wird eine Regelabweichung ΔÎ1 für die Amplitude des Statorstroms ermittelt. Im Funktionsblock 23 wird aus der Regelabweichung ΔÎ1 für die Amplitude des Statorstroms eine Stellgrösse Δf1 für die Statorfrequenz berechnet. Hierbei wird das Vorzeichen sgn(M_{C}) des Soll-Drehmoments M_{C} ausgewertet. Dieses Vorzeichen ist dafür entscheidend, an welcher Flanke der in der Fig. 2 dargestellten Kennlinie der Regler arbeiten muss. Ist dieses Vorzeichen positiv, wird also die Asynchronmaschine zum Antrieb betrieben, so muss zur Ausregelung einer positiven Regelabweichung ΔÎ1, das heisst im Falle, dass der Istwert der Amplitude des Statorstroms Î1_{A} kleiner ist als der Sollwert der Amplitude des Statorstroms Î1_{C,k}, die Statorfrequenz erhöht werden, also die Stellgrösse Δf1 für die Statorfrequenz positiv sein. Umgekehrt muss zur Ausregelung einer negativen Regelabweichung die Stellgrösse Δf1 für die Statorfrequenz negativ sein. Ist hingegen das Vorzeichen des Soll-Drehmoments negativ, wird also die Asynchronmaschine zum Bremsen betrieben, so muss zur Ausregelung einer positiven Regelabweichung ΔÎ1, das heisst im Falle, dass der Istwert der Amplitude des Statorstroms Î1_{A} kleiner ist als der Sollwert der Amplitude des Statorstroms Î1_{C,k}, die Statorfrequenz vermindert werden, also die Stellgrösse Δf1 für die Statorfrequenz negativ sein, und umgekehrt zur Ausregelung negativen Regelabweichung die Stellgrösse Δf1 für die Statorfrequenz negativ sein. Ein Amplitudenbegrenzer 24 begrenzt die Stellgrösse für die Statorfrequenz derart, dass die Rotorfrequenz nicht so stark erhöht wird, dass der Betriebspunkt der Maschine sich weiter von der synchronen Drehzahl entfernt als dies dem maximalen Drehmoment auf einer Betriebskennlinie entspräche. Derart wird sichergestellt, dass der Betriebspunkt der Maschine nicht über die Kipppunkte der Momentenkennlinie wandert. Schliesslich wird aus dem Istwert der Statorfrequenz und der begrenzten Stellgrösse ein Sollwert der Statorfrequenz bestimmt und an einen Wechselrichter, der den Stator mit einer Wechselspannung versorgt, weitergegeben. Derart wird die Statorfrequenz sukzessive verändert, bis die Amplitude des Statorstroms auf den korrigierten Sollwert Î1_{C,k} eingeregelt ist. Im Weiteren wird die Regelabweichung der Statorstrom-Amplitude an einen Funktionsblock 25 weitergegeben, der den Gradienten dieser Regelabweichung über der Zeit auswertet. Wenn diese Regelabweichung einen bestimmten Grenzwert überschreitet, so generiert der Funktionsblock 25 ein Signal S, welches zur Erkennung des Lastverlusts dient.

Bei einem Fortbewegungsmittel, beispielsweise beim Antrieb eines Bahnbetriebsfahrzeugs, kann der Lastverlust auch auf andere Weise detektiert und ein Lastverlustsignal generiert werden. Beispielsweise kann durch Bestimmung der Drehzahl an einer geschleppten, also nicht angetriebenen, Achse eine Ist-Geschwindigkeit des Fahrzeugs bestimmt werden. Unter Kenntnis des Durchmessers eines Antriebsrads und allfälliger Übersetzungen in einem Antriebsstrang kann eine dieser Geschwindigkeit entsprechende Soll-Drehzahl in einem Antriebsstrang bestimmt werden. Wenn eine tatsächliche Drehzahl beim Betrieb einer mit dem Antriebsstrang gekoppelten elektrischen Asynchronmaschine zum Antrieb von der Soll-Drehzahl nach oben abweicht, so kann dies als Traktions- oder Lastverlust gewertet werden, und es kann für die Steuerung der entsprechenden elektrischen Asynchronmaschine das Lastverlustsignal S generiert werden. Wenn eine tatsächliche Drehzahl beim Betrieb einer mit dem Antriebsstrang gekoppelten elektrischen Asynchronmaschine zum Bremsen von der Soll-Drehzahl nach unten abweicht, so kann dies als Traktions- oder Lastverlust gewertet werden, und es kann für die Steuerung der entsprechenden elektrischen Asynchronmaschine das Lastverlustsignal S generiert werden. Ebenso könnte die tatsächliche Geschwindigkeit über Radar- oder GPS-Messungen bestimmt werden; die Bestimmung eines Lastverlustzustands erfolgt in diesem Falle vollkommen analog auf Basis einer der so gemessenen Geschwindigkeit entsprechenden Soll-Drehzahl im Antriebsstrang. Alternativ kann bei einem Fahrzeug mit mehreren Einzelachs-oder Einzelradantrieben eine Drehzahl in einem Antriebsstrang bestimmt werden, bei dem beim Betrieb zum Antrieb die geringste Rad-Umfangsgeschwindigkeit vorliegt, oder aber bei dem im Betrieb zum Bremsen die höchste Rad-Umfangsgeschwindigkeit vorliegt. Dies ist selbstverständlich der Antriebsstrang, an dem der geringste Schlupf oder, idealerweise, kein Schlupf vorliegt. Die Drehzahl dieses Antriebsstrangs kann als Referenz herangezogen werden, und ausgehend von diesem kann die Soll-Drehzahl für jeden anderen Antriebsstrang bzw. des Rotors jeder elektrischen Asynchronmaschine, die mit einem anderen Antriebsstrang gekoppelt ist, bestimmt werden.

Das beschriebene Verfahren zeichnet sich gemäss einer Ausführungsform dadurch aus, dass die Amplitude der Statorspannung in einer elektrischen Asynchronmaschine, bei welcher ein Lastverlust detektiert wurde, unabhängig von der an dieser Asynchronmaschine anliegenden Statorfrequenz gesteuert wird. Die Statorspannung kann gemäss einer Variante des vorliegend beschriebenen Verfahrens als Funktion der Fortbewegungsgeschwindigkeit eines Fortbewegungsmittels bestimmt werden. Gemäss einer weiteren Variante wird die Statorspannung konstant auf dem Wert gehalten, den sie im Zeitpunkt der Detektion des Lastverlusts hatte. Im Bremsbetrieb kann vorgesehen sein, dass als Amplitude der Statorspannung die Amplitude herangezogen wird, die der Drehzahl der Maschine mit dem am langsamsten drehenden Antriebsrad entspricht. Diese Absenkung erfolgt bevorzugt bei konstanter Amplitude des Statorstroms oder konstanter Rotorfrequenz. Die Amplitude der Statorspannung kann sozusagen "auf Vorrat" noch vor einer entsprechenden Verminderung der Statorfrequenz abgesenkt werden, um das Bremsmoment kontrolliert abzusenken.

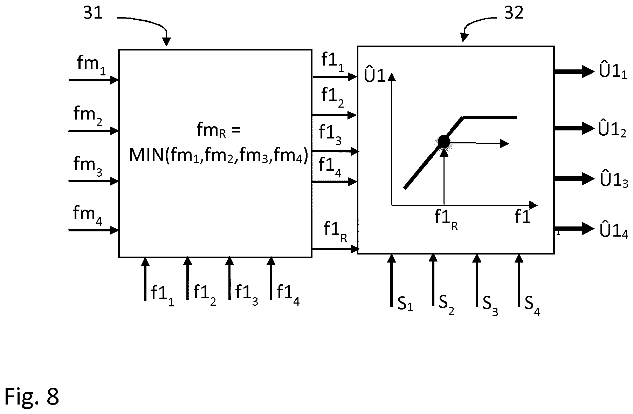

In der Figur 8 ist ein Beispiel für die Steuerung der Amplitude der Statorspannung an einer elektrischen Asynchronmaschine dargestellt. Im dargestellten Beispiel weist beispielsweise ein Fahrzeug vier einzelangetriebene Achsen auf, wobei mit jeder angetriebenen Achse eine elektrische Asynchronmaschine mechanisch zur Drehmomentübertragung auf ein Antriebsrad gekoppelt ist. Ein Funktionsblock 31 erhält als Eingabewerte die Rotor-Ist-Drehzahlen fm₁, fm₂, fm₃ und fm₄ aller elektrischen Asynchronmaschinen. Der Funktionsblock 31 ermittelt beim Betrieb der elektrischen Asynchronmaschinen zum Antrieb des Fahrzeugs, also wenn die Statorfrequenz grösser als die Rotordrehzahl ist, ein Minimum der einzelnen Rotor-Ist-Drehzahlen. Dieses Minimum wird als Referenz-Rotordrehzahl fm_{R} bestimmt. Gemäss weiterer Ausgestaltungen des Verfahrens wird beim Bremsen, also wenn die Statorfrequenz kleiner als die Rotordrehzahl ist, ein Maximum aller Rotor-Ist-Drehzahlen als Referenz-Rotordrehzahl bestimmt. Es ist in diesem Ausführungsbeispiel weiterhin vorausgesetzt, dass an allen Achsen Antriebsräder mit gleichen Antriebsrad-Durchmessern angeordnet sind und in den Antriebssträngen die Übersetzungsverhältnisse zwischen den Antriebsrädern und den elektrischen Asynchronmaschinen identisch sind. In Fällen, in denen dies nicht der Fall ist, wird der Fachmann die hier gemachten Ausführungen ohne weiteres übertragen können, derart, dass die Rotordrehzahl derjenigen Maschine, bei der die Rad-Umfangsgeschwindigkeit am Antriebsrad am kleinsten bzw. beim Bremsen am grössten ist, als Referenz-Rotordrehzahl herangezogen wird. Die Statorfrequenz der als Referenz herangezogenen Maschine dient sodann als Referenz-Statorfrequenz f1_{R}. Die Referenz-Rotordrehzahl fm_{R} kann im Weiteren auch als Soll-Rotordrehzahl fm_{C} in der im Zusammenhang mit der Figur 7 dargestellten Regelung dienen. Zu bemerken ist, dass bei einem Mehrmotorantrieb mit mehreren Asynchronmaschinen für jede der Asynchronmaschinen ein Stromregelkreis der in Verbindung mit Figur 7 beschriebenen Art angeordnet sein kann. Entsprechend steht für jede der Asynchronmaschinen ein Lastverlustsignal S₁, S₂, S₃ und S₄ zur Verfügung. Die Statorfrequenzen f1₁, f1₂, f1₃ und f1₄ sowie die Referenz-Statorfrequenz f1_{R} werden sodann an den Funktionsblock 32 übergeben. Funktionsblock 32 erhält weiterhin die Lastverlust-Signale S₁, S₂, S₃ und S₄ der einzelnen Asynchronmaschinen. Aufgabe des Funktionsblocks 32 ist es, die Sollwerte der Stator-Spannungsamplituden Û1₁, Û1₂, Û1₃ und Û1₄ der vier Asynchronmaschinen zu steuern und beispielsweise entsprechende Steuersignale für die Stator-Spannungsamplituden an die Wechselrichter für die einzelnen Asynchronmaschinen weiterzuleiten. Der Funktionsblock 32 gibt, sofern das Lastverlustsignal S inaktiv ist, in Abhängigkeit von den Statorfrequenzen f1₁ bis f1₄ aller vier Asynchronmaschinen die Stator-Spannungsamplituden Û1₁ bis Û1₄ für jede der vier elektrischen Asynchronmaschinen aus. So wird jede der Asynchronmaschinen mit der Spannungsamplitude versorgt, die der Statorfrequenz der jeweiligen Asynchronmaschine entspricht. Falls allerdings für eine der Asynchronmaschinen das Lastverlustsignal S aktiv ist, so wird die Spannungsamplitude für diese Maschine als Funktion der Referenz-Statorfrequenz eingestellt. Die Statorfrequenz einer Asynchronmaschine mit Lastverlust wird also beispielsweise durch den Stromregler, der im Zusammenhang mit der Figur 7 beschrieben wurde, erhöht. Gleichzeitig wird, auch im Betriebsbereich, in dem eine Maschine normalerweise mit konstanter Statorflussverkettung betrieben würde, die Stator-Spannungsamplitude eben nicht mit der Statorfrequenz erhöht. Die Statorspannung an einer Maschine mit Lastverlust ist also, wenn die Asynchronmaschine zum Antrieb betrieben wird, also wenn die Statorfrequenz grösser ist als die Rotordrehzahl, niedriger als sie es im Nennbetrieb wäre. Daraus resultiert eine Verminderung des Kippmomentes. Es resultiert demnach, selbst wenn die Amplitude des Statorstroms der Maschine mit Lastverlust konstant gehalten wird, eine Momentenkennlinie, wie sie sich in den Figuren 4 und 5 in den mit B und C gekennzeichneten Betriebsbereichen darstellt. Das heisst, mit zunehmendem Schlupf eines Antriebsrads, oder allgemeiner, mit zunehmender Erhöhung der Rotordrehzahl über eine Solldrehzahl, verläuft das Drehmoment entlang einer hyperbolischen Momentenkennlinie asymptotisch gegen Null. Es kann in anderen Ausgestaltungen des Verfahrens vorgesehen sein, dass die Stator-Spannungsamplituden aller Maschinen konstant auf dem Wert gehalten werden, der bei der Maschine vorliegt, bei der ein Lastverlust festgestellt wurde. Die Spannungsamplituden werden dann so lange konstant gehalten, bis der Lastverlust, also beispielsweise ein Schleudern einer Antriebsachse, beherrscht ist. Dergestalt kann ein Allradschleudern des Antriebs eines Fortbewegungsmittels, und insbesondere eines Bahnbetriebsfahrzeuges, kontrolliert abgefangen werden. Im Bremsbetrieb, d. h., wenn eine elektrische Asynchronmaschine zum Abstützen eines Drehmoments, betrieben wird, also wenn die Rotordrehzahl grösser als die Statorfrequenz ist, kann die Amplitude der Statorspannung gemäss einer anderen Strategie derart variiert werden, dass das Bremsmoment mit zunehmender Abweichung der Ist-Rotordrehzahl von einer Solldrehzahl kleiner wird. In einer beispielhaften Ausgestaltung ist vorgesehen, dass die Amplitude der Statorspannung an der sich am langsamsten drehenden Maschine bei konstanter Amplitude des Statorstroms so weit gesenkt wird, bis das Bremsschleudern, also der Traktionsverlust im Bremsbetrieb, aufgehoben ist. Allgemein wäre festzustellen, dass beim Betrieb zum Antrieb, d.h. die Statorfrequenz ist grösser als die Rotordrehzahl, beim Lastverlust zuerst die Statorfrequenz erhöht und anschliessend optional die Amplitude der Statorspannung verändert wird, wie oben beschrieben. Bei Lastverlust im Bremsbetrieb wird hingegen zuerst die Amplitude der Statorspannung vermindert und anschliessend wird die Statorfrequenz gesenkt.

Der Fachmann wird ohne weiteres in der Lage sein, alle in diesem Ausführungsbeispiel gemachten Aussagen auch dann, wenn der Bremsbetrieb im Einzelfall nicht explizit beschrieben wurde, auf den Fall zu übertragen, bei dem eine elektrische Asynchronmaschine zum Bremsen, d. h. zum Abstützen eines Drehmoments, betrieben wird.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

## Patentansprüche

1. Verfahren zum Betrieb einer elektrischen Asynchronmaschine, wobei die elektrische Asynchronmaschine einen Rotor und einen Stator umfasst, wobei das Verfahren umfasst, an einer Statorwicklung eine Statorspannung anzulegen, wobei die Statorspannung eine Wechselspannung mit einer Stator-Spannungsamplitude und einer Statorfrequenz ist,
wobei das Verfahren weiterhin umfasst, die elektrische Asynchronmaschine in einem Arbeitspunkt zu betreiben, bei dem an die Statorwicklung eine Wechselspannung mit einer ersten Stator-Spannungsamplitude und einer ersten Statorfrequenz angelegt wird, wobei ein Stator-Wechselstrom mit einer Stator-Stromamplitude fliesst und ein Drehmoment an einer Abtriebswelle der Asynchronmaschine erzeugt wird,
wobei der Rotor sich mit einer Rotordrehzahl dreht und im Arbeitspunkt dem von der Asynchronmaschine erzeugten Drehmoment ein Lastmoment entgegenwirkt, welches betragsmässig dem erzeugten Drehmoment an der Abtriebswelle entspricht,
und weiterhin zu bestimmen, ob ein Lastverlust-Zustand vorliegt,
wobei in einem Lastverlust-Zustand der Betrag des Lastmoments kleiner ist als der Betrag des erzeugten Drehmoments an der Abtriebswelle, und in einem Lastverlust-Zustand die Statorfrequenz gleichsinnig mit einer Änderung der Rotordrehzahl zu verändern.

2. Verfahren gemäss dem vorstehenden Anspruch, wobei das Bestimmen des Lastzustandes umfasst, eine Soll-Drehzahl des Rotors zu bestimmen,
eine Ist-Drehzahl des Rotors zu bestimmen,
einen Drehzahl-Toleranzwert vorzugeben, und
eine Drehzahlabweichung als Differenz von Ist-Drehzahl abzüglich Soll-Drehzahl zu bilden, wobei der Lastverlust-Zustand detektiert wird, wenn ein Absolutwert der Drehzahlabweichung den Drehzahl-Toleranzwert überschreitet.

3. Verfahren gemäss einem der vorstehenden Ansprüche, wobei das Bestimmen des Lastzustandes umfasst, einen Gradienten des Istwertes der Stator-Stromamplitude über der Zeit zu bestimmen, wobei der Lastverlust-Zustand detektiert wird, wenn ein Absolutwert des Istwertes des Gradienten der Stator-Stromamplitude über der Zeit einen Grenzwert überschreitet.

4. Verfahren gemäss einem der vorstehenden Ansprüche, umfassend, im Lastverlust-Zustand die Statorfrequenz derart zu variieren, dass die Stator-Stromamplitude auf einen Sollwert eingeregelt wird.

5. Verfahren gemäss dem vorstehenden Anspruch, umfassend, den Sollwert der Stator-Stromamplitude als Funktion einer Abweichung einer Ist-Drehzahl des Rotors von der Soll-Drehzahl des Rotors vorzugeben.

6. Verfahren gemäss dem vorstehenden Anspruch, umfassend, den Sollwert der Stator-Stromamplitude als monoton fallende Funktion der Drehzahlabweichung vorzugeben.

7. Verfahren gemäss einem der vorstehenden Ansprüche, umfassend, die Statorfrequenz im Lastverlust-Zustand derart zu verändern, dass die Differenz von Statorfrequenz abzüglich Rotordrehzahl innerhalb eines vorgegebenen Bandes gehalten wird.

8. Verfahren gemäss einem der vorstehenden Ansprüche, umfassend, im Lastverlust-Zustand die Stator-Spannungsamplitude unabhängig von der Statorfrequenz einzustellen.

9. Verfahren gemäss einem der vorstehenden Ansprüche, umfassend, im Lastverlust-Zustand die Amplitude der Statorspannung wenigstens über ein Zeitintervall konstant zu halten.

10. Verfahren gemäss einem der vorstehenden Ansprüche, umfassend, die Amplitude der Statorspannung als Funktion der Soll-Drehzahl vorzugeben.

11. Verfahren gemäss dem vorstehenden Anspruch, umfassend, die Amplitude der Statorspannung im Lastverlust-Zustand kontinuierlich oder schrittweise einer Soll-Amplitude anzupassen, welche der Soll-Drehzahl zugeordnet ist.

12. Verfahren gemäss einem der vorstehenden Ansprüche, wobei die elektrische Asynchronmaschine Bestandteil eines Antriebssystems für ein Fortbewegungsmittel ist, umfassend, die Soll-Drehzahl in Abhängigkeit von der Fortbewegungsgeschwindigkeit des Fortbewegungsmittels zu bestimmen.

13. Verfahren gemäss einem der vorstehenden Ansprüche, umfassend die elektrische Asynchronmaschine als Bestandteil eines Antriebssystems für ein Fahrzeug zu betreiben, und wobei innerhalb des Fahrzeugs eine Mehrzahl von Antriebssträngen angeordnet ist und in jedem Antriebsstrang wenigstens eine elektrische Asynchronmaschine mit wenigstens einem Antriebsrad gekoppelt ist.

14. Verfahren gemäss Anspruch 13, wobei das Verfahren umfasst, die elektrischen Asynchronmaschinen zum Antrieb zu betreiben und die Soll-Drehzahl für jede elektrische Asynchronmaschine zu bestimmen, indem aus einer Ist-Drehzahl an jedem Antriebsstrang sowie dem Radumfang des jeweiligen Antriebsrades eine Ist-Radumfangsgeschwindigkeit ermittelt wird,
denjenigen Antriebsstrang, für den die geringste Ist-Rad-Umfangsgeschwindigkeit ermittelt wird, als Referenz-Antriebsstrang heranzuziehen,
und die Soll-Drehzahl der elektrischen Asynchronmaschine an jedem Antriebsstrang als diejenige Drehzahl zu bestimmen, die sich unter Berücksichtigung der jeweiligen Übersetzungsverhältnisse und des Radumfangs des jeweiligen Antriebsrades ergäbe, wenn die Rad-Umfangsgeschwindigkeit am jeweiligen Antriebsrad der Rad-Umfangsgeschwindigkeit am Referenz-Antriebsstrang entspräche.

15. Verfahren gemäss Anspruch 13, wobei das Verfahren umfasst, die elektrischen Asynchronmaschinen zum Bremsen zu betreiben und die Soll-Drehzahl für jede elektrische Asynchronmaschine zu bestimmen, indem aus einer Ist-Drehzahl an jedem Antriebsstrang sowie dem Radumfang des jeweiligen Antriebsrades eine Ist-Radumfangsgeschwindigkeit ermittelt wird,
denjenigen Antriebsstrang, für den die grösste Ist-Rad-Umfangsgeschwindigkeit ermittelt wird, als Referenz-Antriebsstrang heranzuziehen,
und die Soll-Drehzahl der elektrischen Asynchronmaschine an jedem Antriebsstrang als diejenige Drehzahl zu bestimmen, die sich unter Berücksichtigung der jeweiligen Übersetzungsverhältnisse und des Radumfangs des jeweiligen Antriebsrades ergäbe, wenn die Rad-Umfangsgeschwindigkeit am jeweiligen Antriebsrad der Rad-Umfangsgeschwindigkeit am Referenz-Antriebsstrang entspräche.
